# EUROPEAN PATENT APPLICATION

(11) **EP 1 339 262 A1**
(43) Date of publication of application: **27.08.2003**
(21) Application number: 02388016.4
(22) Date of filing: 26.02.2002
(51) Int. Cl.: H05B 33/08

(54) **A driver for at least three electrical loads, especially for electroluminescent light sources**

(71) Applicant: TELEFONAKTIEBOLAGET LM ERICSSON, 126 25 Stockholm (SE)
(72) Inventor: Andersson, Hakan, 21128 Malmö (SE)
(74) Representative: Boesen, Johnny Peder

(57) **Abstract**

In a method of driving three electrical loads (24, 25, 26) by providing a first driver output signal (V₁) and a second driver output signal (V₂) different from the first driver output signal, a first electrical load (24) is connected between the first and second driver output signals. A third driver output signal (V₃) which can be switched between a first state, in which it is substantially similar to the first driver output signal (V₁), and a second state, in which it is substantially similar to the second driver output signal (V₂), is provided. A second electrical load (26) is connected between the first and third driver output signals and a third electrical load (25) between the second and third driver output signals. In this way, one driver circuit can drive the first load, while the two additional loads can be driven by adding only one further driver circuit.

## Description

### Technical Field of the Invention

The invention relates to a method of driving at least three electrical loads, wherein the method comprises the step of providing a first driver output signal and a second driver output signal different from said first driver output signal; and connecting a first electrical load between said first and second driver output signals. The invention further relates to an electronic device comprising at least three electrical loads and a driver circuit therefor, and to a driver circuit for electrical loads.

### Description of Related Art

Several methods and systems of driving electrical loads are known. Especially in small portable devices produced in high quantities, such as mobile telephones, it is important that drivers of such electrical loads can be implemented with as few components as possible in order to reduce the occupied space as well as the cost of the device. Examples of such electrical loads may be light sources.

Normally, a separate driver circuit having at least two driver output signals is required for each electrical load, and thus three electrical loads require the use of three separate driver circuits. However, the use of three separate drivers means additional components, and thus extra costs and occupied space in the device.

Therefore, it is an object of the invention to provide a method of driving at least three electrical loads, which reduces the number of components, and thus also the cost and the required space.

### Summary

According to the invention the object is achieved in that the method further comprises the steps of providing a third driver output signal which can be switched between a first state, in which it is substantially similar to the first driver output signal, and a second state, in which it is substantially similar to the second driver output signal; and connecting a second electrical load between the first and the third driver output signal and a third electrical load between the second and the third driver output signal. By connecting the second and third electrical loads in this way, one driver circuit, i.e. the first and the second driver output signal, is able to drive the first load, while the two additional loads can be driven by adding only one further driver circuit, which may even be implemented with fewer components compared to the first driver circuit, because only one additional driver output signal is needed to drive two further loads.

The driven electrical loads may be light sources, which are often used in small portable devices, such as mobile telephones, in which the saving of costs and occupied space is very important. Especially, when the driven light sources are of an electro-luminescent type these savings are important because this type of light source requires high voltage drivers providing e.g. a 90V-peak voltage, which are difficult to design with a low component area and a low number of components.

In an expedient embodiment of the invention the first and second driver output signals are provided as periodic signals having a mutual phase difference. The use of periodic signals allows the use of electrical loads requiring an AC voltage. Expediently, the first and second driver output signals have a substantially triangular waveform.

The method may further comprise the step of providing a fourth driver output signal which is substantially similar to the second driver output signal when the third driver output signal assumes its first state, and substantially similar to the first driver output signal when the third driver output signal assumes its second state. This signal may be used for driving further loads or as an indication signal. As an example, the method may further comprise the step of providing a signal indicating the state of said third driver output signal, said indicating signal being provided by comparing at least one of said third and fourth driver output signals to at least one of said first and second driver output signals.

As mentioned, the invention further relates to an electronic device comprising at least three electrical loads and a driver circuit therefor, wherein said driver circuit is arranged to provide a first driver output signal and a second driver output signal different from said first driver output signal, and a first electrical load is connected between said first and second driver output signals.

When the driver circuit is further arranged to provide a third driver output signal which can be switched between a first state, in which it is substantially similar to the first driver output signal, and a second state, in which it is substantially similar to the second driver output signal, and a second electrical load is connected between the first and the third driver output signal and a third electrical load is connected between the second and the third driver output signal, one driver circuit, i.e. the first and the second driver output signal, is able to drive the first load, while the two additional loads can be driven by adding only one further driver circuit, which may even be implemented with fewer components compared to the first driver circuit, because only one additional driver output signal is needed to drive two further loads.

The electrical loads may be light sources, which are often used in small portable devices, such as mobile telephones, in which the saving of cost and occupied space is very important. Especially, when the light sources are of an electro-luminescent type these savings are important because this type of light source requires high voltage drivers providing e.g. a 90V-peak voltage, which are difficult to design with a low component area and a low number of components.

In an expedient embodiment of the invention the driver circuit is arranged to provide the first and second driver output signals as periodic signals having a mutual phase difference. The use of periodic signals allows the use of electrical loads requiring an AC voltage. Expediently, the driver circuit is arranged to provide the first and second driver output signals with a substantially triangular waveform.

The driver circuit may further be arranged to provide a fourth driver output signal which is substantially similar to the second driver output signal when the third driver output signal assumes its first state, and substantially similar to the first driver output signal when the third driver output signal assumes its second state. This signal may be used for driving further loads or as an indication signal. As an example, the device may further comprise circuitry for providing a signal indicating the state of said third driver output signal by comparison of at least one of said third and fourth driver output signals to at least one of said first and second driver output signals.

As mentioned, the invention further relates to a driver circuit for electrical loads, said driver circuit having a first driver output terminal arranged to provide a first driver output signal and a second driver output terminal arranged to provide a second driver output signal different from said first driver output signal.

When the driver circuit further has a third driver output terminal arranged to provide a third driver output signal which can be switched between a first state, in which it is substantially similar to the first driver output signal, and a second state, in which it is substantially similar to the second driver output signal, the first and the second driver output signal are able to drive a first load, while two additional loads can be driven by adding only one further driver output terminal, which may even be implemented with fewer components compared to the first one, because only one additional driver output signal is needed to drive two further loads.

In an expedient embodiment of the invention the driver circuit is arranged to provide the first and second driver output signals as periodic signals having a mutual phase difference. The use of periodic signals allows the use of electrical loads requiring an AC voltage. Expediently, the driver circuit is arranged to provide the first and second driver output signals with a substantially triangular waveform.

The driver circuit may further be arranged to provide a fourth driver output signal which is substantially similar to the second driver output signal when the third driver output signal assumes its first state, and substantially similar to the first driver output signal when the third driver output signal assumes its second state. This signal may be used for driving further loads or as an indication signal.

### Brief Description of the Drawings

The invention will now be described more fully below with reference to the drawings, in which
figure 1 shows a diagram of a known driver circuit for electro-luminescent light sources;
figure 2 shows a bridge coupling used in the driver circuit of figure 1;
figure 3 shows a timing diagram for the driver circuit of figure 1;
figure 4 shows a layout of a keyboard and a display of a mobile telephone;
figure 5 shows how the keys of the keyboard of figure 4 may be illuminated in a digit mode;
figure 6 shows how the keys of the keyboard of figure 4 may be illuminated in a navigation mode;
figure 7 shows a first embodiment of a driver circuit for three electro-luminescent light sources;
figure 8 shows a timing diagram for the driver circuit of figure 7;
figure 9 shows a circuit sensing the present mode of the driver circuit of figure 7;
figure 10 shows a timing diagram for the circuit of figure 9 in digit mode;
figure 11 shows a timing diagram for the circuit of figure 9 in navigation mode; and
figure 12 shows another embodiment of a driver circuit for three electrical loads.

### Detailed Description of Embodiments

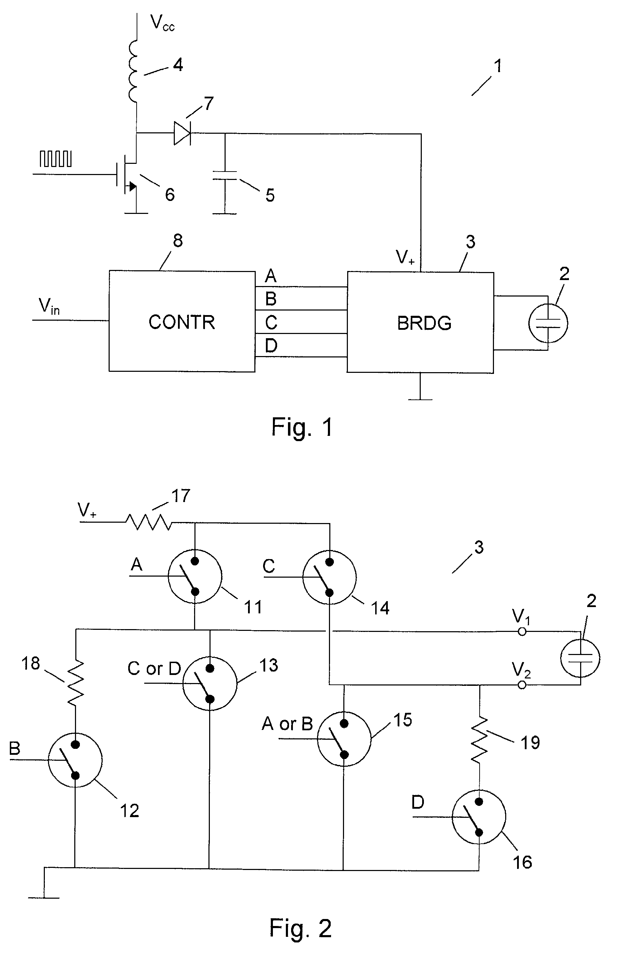

One example of an application in which the invention can be used is driving electro-luminescent light sources. Figures 1 and 2 show an example of a known driver 1 for such a light source 2. The driver is based on a bridge coupling 3 which is shown in more detail in figure 2. The bridge coupling 3 transforms a high DC voltage to a high AC voltage which is supplied to an electro-luminescent light source 2.

The high DC voltage may be generated by a well-known boost converter utilizing an inductor 4 and a capacitor 5 together with a switching transistor 6 and a diode 7 forming a step-up DC/DC converter. The switching transistor 6 is controlled by a pulse signal of e.g. 50 kHz, and each time the transistor is switched off, the current through the inductor 4 will continue to flow through the diode 7 and thus charge the capacitor 5 to a higher voltage. Although not shown in the figure, a voltage limiter will normally turn off the switching transistor 6 when the voltage has reached an upper limit of e.g. 150 or 200 Volts.

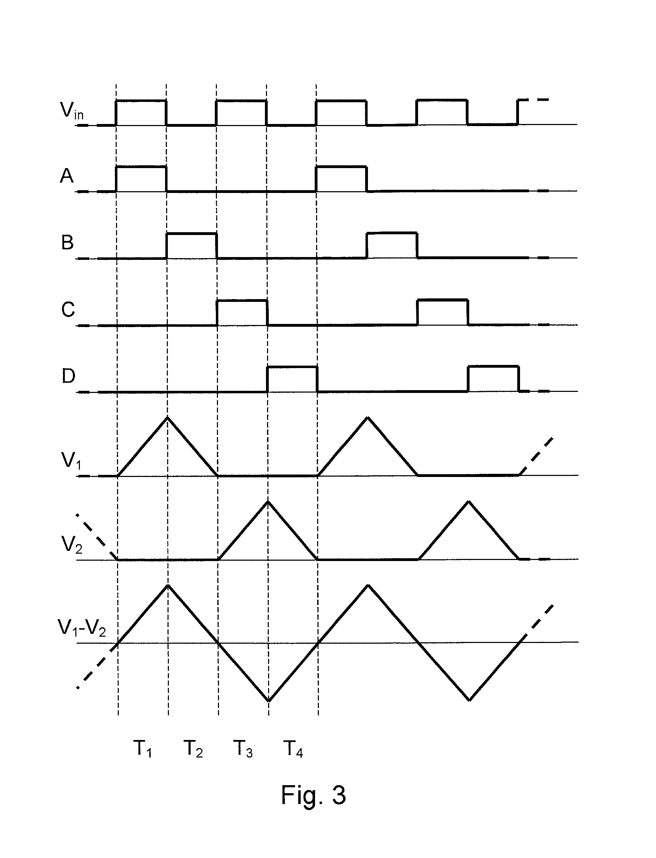

The bridge coupling 3 is controlled by a control circuit 8 having an input signal Vᵢₙ, which is a square wave signal of e.g. 500 Hz. In the control circuit 8 this signal is divided to 250 Hz and then combined with Vᵢₙ to generate four signals A, B, C and D as shown in figure 3. The bridge coupling 3 comprises six controllable switches 11, 12, 13, 14, 15 and 16, which are controlled by the signals A, B, C and D, so that e.g. the switch 11 is closed when signal A is high and open when signal A is low. The other switches are controlled similarly by the signals as indicated in figure 3. The switches 11, 12, 13, 14, 15 and 16 are typically implemented as field effect transistors or bipolar transistors. As shown, the coupling also comprises the resistors 17, 18 and 19. The electro-luminescent light source 2 is connected to the two output signals V₁ and V₂, and as illustrated the light source has characteristics corresponding to a capacitor. The function of the coupling will be explained below with reference to the signals shown in figure 3.

In the time period T₁, in which signal A is high, switches 11 and 15 are closed, and the capacitor of the light source 2 is charged through the resistor 17 so that signal V₁ increases. It should be noted that although V₁ is shown as increasing linearly in figure 3, it is in reality a normal charging curve in which V₁ approaches the high DC voltage V₊. However, the first part of the curve, which is used here, is sufficiently close to being linear to justify the use of a linear curve in figure 3 for illustrative purposes. It should also be noted that the voltage level of the signals V₁, V₂ and V₁-V₂ is much higher than that of the signals Vᵢₙ, A, B, C and D, and thus the curves of figure 3 just illustrate the shape of the voltage signals, not the actual voltage level. The peak value of the signals V₁, V₂ and V₁-V₂ is approximately 90 Volts.

In the time period T₂, in which signal B is high, switches 12 and 15 are closed, and the capacitor of the light source 2 is now discharged through the resistor 18 so that signal V₁ now decreases. Again the discharge curve is shown as linear although this is just an approximation to the true curve. Resistor 18 is selected so that V₁ is discharged to 0 Volts at the end of the time period T₂.

This sequence is now repeated, just with the opposite polarity, so that in the time period T₃, in which signal C is high, switches 13 and 14 are closed, and the capacitor of the light source 2 is charged through the resistor 17 so that signal V₂ increases to approximately 90 Volts. In the time period T₄, in which signal D is high, switches 13 and 16 are closed, and the capacitor of the light source 2 is now discharged through the resistor 19 so that signal V₂ now decreases. As seen from figure 3, the voltage V₁-V₂, which is the resulting voltage over the electro-luminescent light source 2, is a triangular waveform with a frequency of 250 Hz and an amplitude of approximately 90 Volts. The frequencies and voltage levels mentioned above should be considered as examples only since other values can be used as well.

One application for electro-luminescent light sources is backlight for the keys of a keyboard on e.g. a mobile telephone.

Presently, mobile phones are equipped with a keyboard and normally also with backlight of the keys in order to ensure the use of the keyboard under dark conditions. As there is a desire to make mobile telephones increasingly smaller, the area available for the keyboard is also reduced. The result is that the individual keys tend to be situated too close to each other for practical use, since at the same time there is a need for further keys on the keyboard. One way to reduce the keyboard size without arranging the keys too closely is to allocate several functions to each key, or at least to some of them. The actual function of a key is then controlled by means of a shift key as in a computer keyboard. In this way the number of keys is reduced and a greater space for each key is thus achieved. In order to utilize the different functions of each key, also under dark conditions, a dual mode backlight is needed so that only the selected function of a given key is illuminated.

However, it is hard to separate the light when Light Emitting Diodes (LEDs) are used for the backlighting function. LEDs tend to disperse the light widely, and a separation of the keys is needed to inform the user of the active key mode without disturbing the neighbour key. The use of several LEDs for each key is an expensive solution due to the high number of LEDs needed. The light emission problem in LED applications could be solved by use of a light guide, but such a light guide is troublesome to define, and it takes up space.

Electro-luminescent light sources, however, are suitable for this application because no light guide is needed due to the fact that the light is flat emitted. However, as it is seen from the description of the driver circuits above, relatively complex driver circuits are needed, which require a considerable component area and imply a high cost. Further, this problem is aggravated, because in this case three separate light sources have to be used, i.e. one which is switched on permanently for the display (typically an LCD (Liquid Crystal Display)) and the shift key, and one for each of the two modes, e.g. a navigation mode and a digit mode. A solution to this problem is shown below.

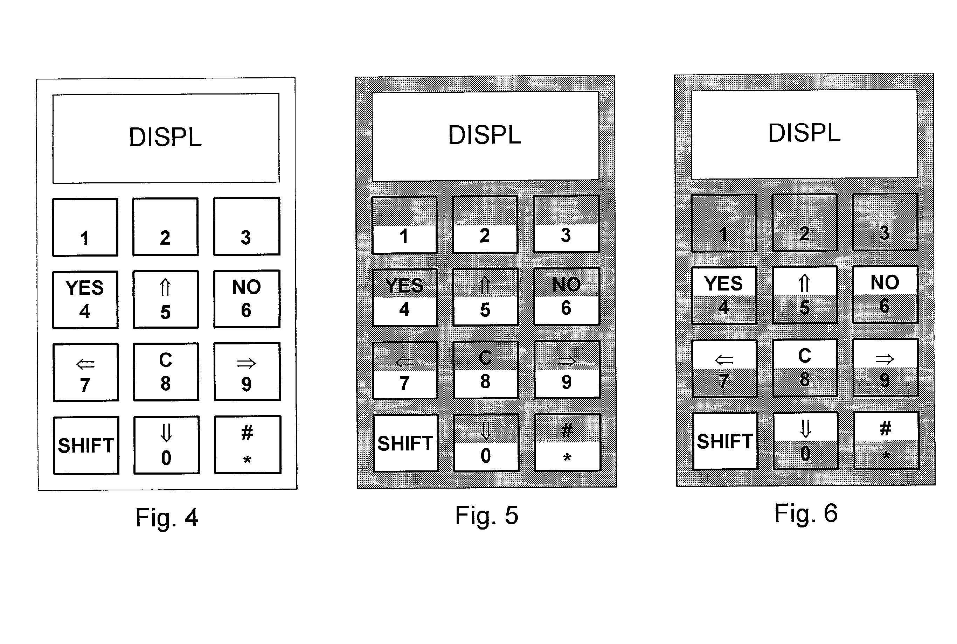

Figures 4 to 6 show an example of how the three different light sources are used. Figure 4 shows the layout of a keyboard and a display of a mobile telephone. It is seen that several of the keys are allocated to two different functions, and both functions are indicated on the keys. As an example the key having the function "4" in the digit mode is also used for the function "YES" in the navigation mode. The keys may be separate keys on a usual keyboard or keypad, or they may be part of a touchscreen. Figure 5 shows how the keys may be illuminated in the digit mode. The digit part of each key is illuminated while the navigation part of the keys is kept dark. Similarly, figure 6 shows the navigation mode in which the navigation part of each key is illuminated while the digit part of the keys is kept dark. Thus the illuminated part of the keys indicates to the user which mode is active at a given time. It is noticed that the shift key and the display are illuminated in both modes.

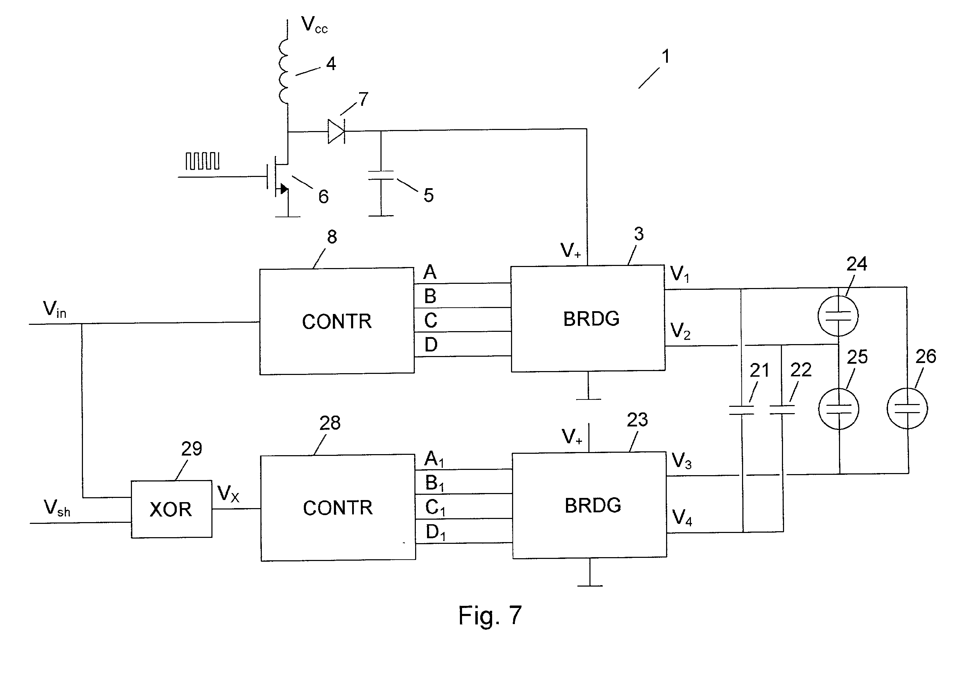

Figure 7 illustrates an example of corresponding driving circuitry. As illustrated, three electro-luminescent light sources 24, 25 and 26 are used, although it is noted that each of these light sources may be subdivided into several smaller light sources connected in parallel, e.g. one for each key. The electro-luminescent light source 24, which illuminates the display and the shift key, is connected to the two output signals V₁ and V₂ of a bridge coupling 3 like the light source 2 in figures 1 and 2. A further bridge coupling 23 in combination with a corresponding control circuit 28 are similar to the coupling 3 and the circuit 8, except that the output signals of the coupling 23 are labelled V₃ and V₄. The electro-luminescent light source 25, which illuminates the navigation part of the keys, is connected to the two output signals V₂ and V₃ of the bridge couplings 3 and 23, while the electro-luminescent light source 26, which illuminates the digit part of the keys, is connected to the two output signals V₁ and V₃ of the bridge couplings 3 and 23.

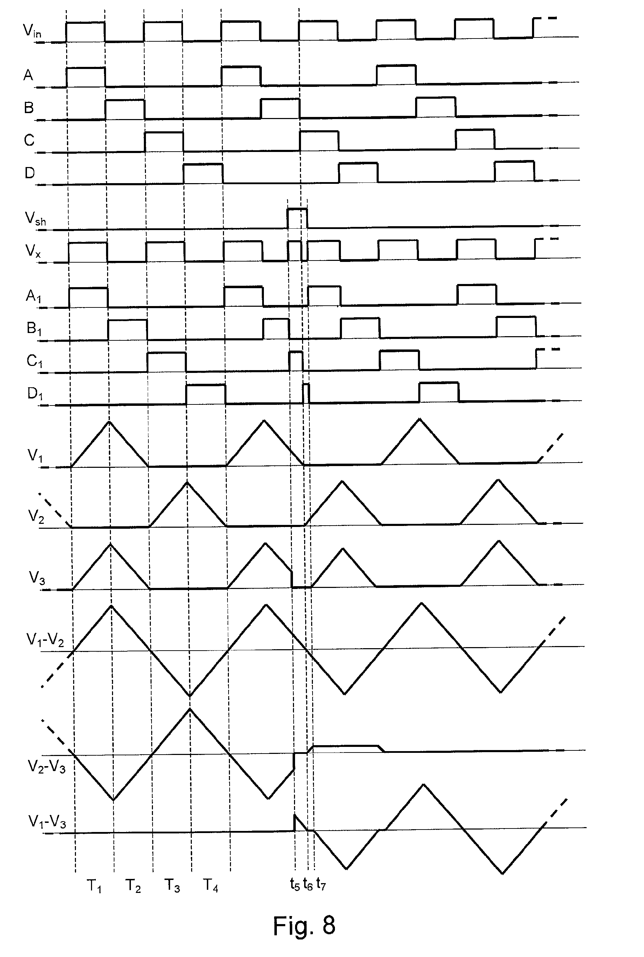

In order to shift between the two light sources 25 and 26, and thus between the two modes, the control circuit 8 is connected to the input signal Vᵢₙ like in figure 1, while the control circuit 28 is connected to a signal V_{X} generated by an XOR gate 29. A shift signal Vₛₕ, which is a normally low signal in which a short pulse of e.g. 0.5 ms appears when a shift from one mode to the other is desired, is connected to one input of the XOR gate 29. As will be described later, this pulse may be generated either manually or automatically. The other input of the XOR gate 29 is connected to the input signal Vᵢₙ. Thus the signal V_{X} will be identical to Vᵢₙ most of the time, but during the pulse in the shift signal Vₛₕ it will be inverted. As illustrated in figure 8 the result is that during the pulse in the shift signal Vₛₕ the signal V_{X} will experience an extra pulse shift causing a phase shift of the signals A1, B1, C1 and D1 compared to the signals A, B, C and D.

In the left part of figure 8 the signals A₁, B₁, C₁ and D₁ are in phase with, i.e. identical to, the signals A, B, C and D. Consequently, also the output V₃ of the bridge coupling 23 will be identical to the output V₁ of the bridge coupling 3. This means that the light source 25 illuminating the navigation part of the keys, which is connected to the output signals V₂ and V₃, experiences a voltage similar to the light source 24 connected to the output signals V₁ and V₂, i.e. the permanent light source. Thus the navigation part of the keys will be illuminated. On the other hand, the light source 26 illuminating the digit part of the keys, which is connected to the output signals V₁ and V₃, experiences no voltage because these signals are identical. Thus the digit part of the keys will not be illuminated. The keyboard is in the navigation mode.

At the time t₅ a pulse in Vₛₕ arrives, and it is seen that this causes an extra pulse to occur in V_{X}. The period of time from t₅ to t₆ corresponds to T₃ in the left part of the figure, while the period of time from t₆ to t₇ corresponds to T₄ in the left part The result is that V₃ is now changed to be in phase with, i.e. identical to, V₂ instead of V₁. As seen the first triangle after the shift may be slightly distorted due to the shorter charging time of the capacitor, but this slight distortion does not affect the function. This means that the light source 25 illuminating the navigation part of the keys, which is connected to the output signals V₂ and V₃, now experiences no voltage because these signals are identical. Thus the navigation part of the keys will not be illuminated. On the other hand, the light source 26 illuminating the digit part of the keys, which is connected to the output signals V₁ and V₃, now experiences a voltage similar to the light source 24 connected to the output signals V₁ and V₂, i.e. the permanent light source. Thus the digit part of the keys will now be illuminated. The keyboard is in the digit mode.

The next pulse in the signal Vₛₕ will cause a shift back to the navigation mode.

In figure 7 the bridge coupling 23 is shown with two outputs V₃ and V₄ corresponding to the outputs V₁ and V₂ of the coupling 3. As described above only V₃ is needed for driving the three light sources. This means that the bridge coupling 23 may be simplified compared to the bridge coupling 3 in that the switches 14, 15 and 16 and the resistor 17 may be avoided. However, it is often convenient to use identical couplings, e.g. when the couplings are implemented as integrated circuits, and in that case balance capacitors 21 and 22 may be connected from the output V₄ of the coupling 23 to the outputs V₁ and V₂ of the coupling 3, respectively. Alternatively, additional light sources may be connected to V₄. It is noted that in navigation mode, where V₃ equals V₁, V₄ will be equal to V₂, while in digit mode, where V₃ equals V₂, V₄ will be equal to V₁.

The circuit described above solves the problem of switching between the two modes with the use of a limited number of components. Normally, this switching is difficult and component-consuming because of the high voltages used for driving electro-luminescent light sources. An alternative method would have been to use a semiconductor relay or an advanced solution with high voltage switches. However, none of these solutions are applicable for high volume production of communications devices because the components are too expensive and too voluminous.

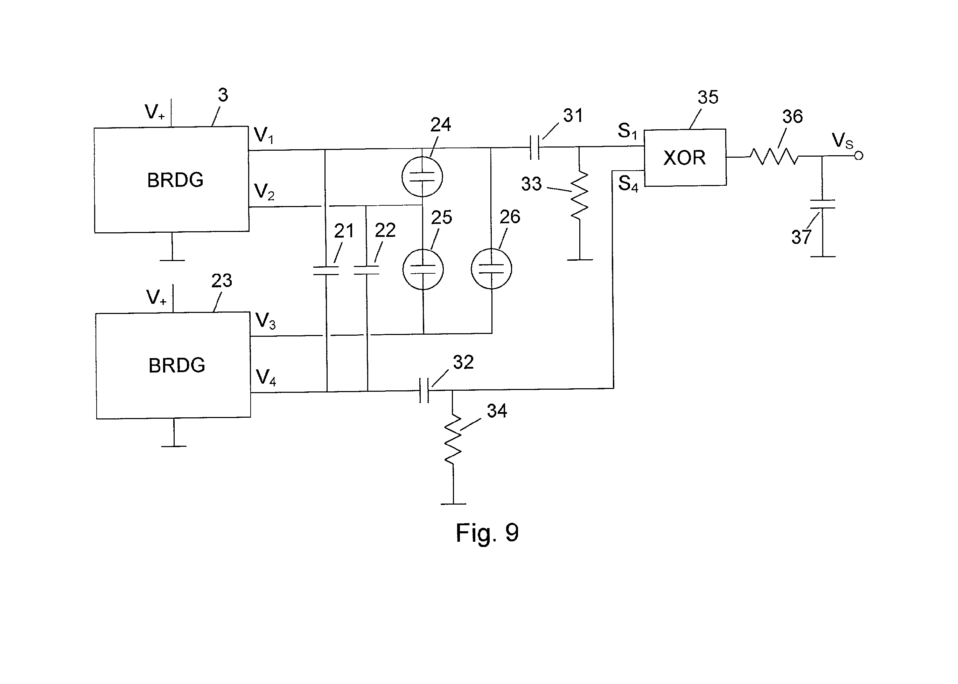

The switching between the two modes in the driver circuit described above is normally accomplished by activation of the shift key which generates the pulse in the signal Vₛₕ. However, this pulse may also be generated automatically by the control circuitry of the communications device, e.g. to ensure that the keyboard is set to the right mode during power-up. In this case a circuit sensing the present mode of the driver is needed. This can be done as described below with reference to figure 9.

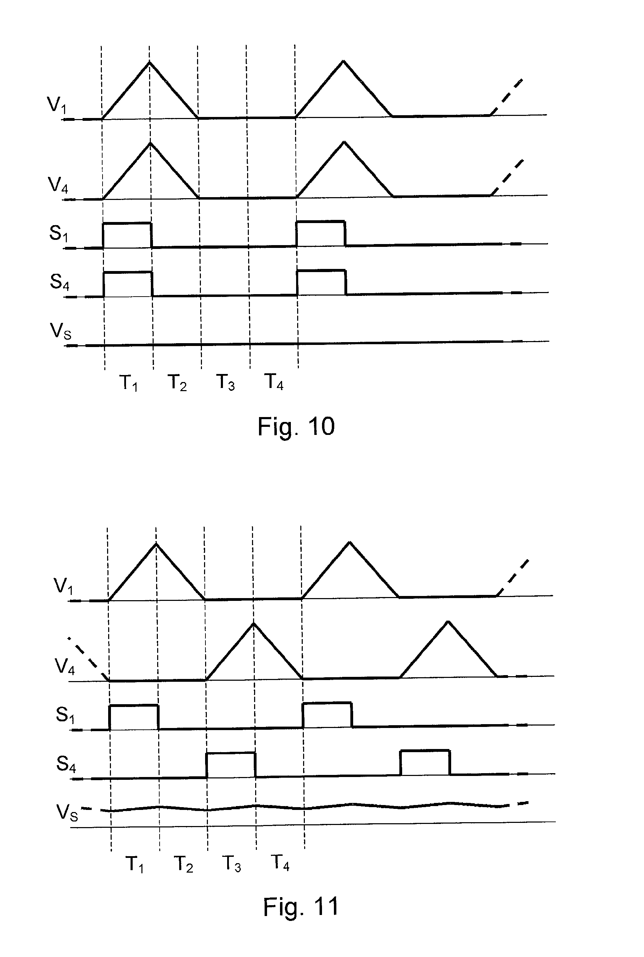

The rise times of the ramps of the triangular signals V₁ and V₄ are derived and put to small signal level by the capacitors 31 and 32 and the resistors 33 and 34. The resulting signals S₁ and S₄ will show positive voltages of approximately 2.5 Volts corresponding to the positive ramps of V₁ and V₄, respectively, and they are connected to the inputs of an XOR gate 35. Figure 10 shows the situation for digit mode in which V₁ and V₄ are identical to each other. In the time period T₁, in which V₁ and V₄ are both rising, signals S₁ and S₄ will be high, while they will be low the rest of the time. In reality the signals will be more distorted than shown in the figure, so more correctly the illustrated signals just indicate that in the time period T1 signals S₁ and S₄ are above the input threshold of the XOR gate 35, while they are below the input threshold the rest of the time. Since the two inputs to the XOR gate 35 are identical, the output of the gate will continue to be low. The low pass filter comprising a resistor 36 and a capacitor 37 will not change this, and thus the sensing signal V_{S} is also low, indicating that the illumination of the keyboard is in the digit mode.

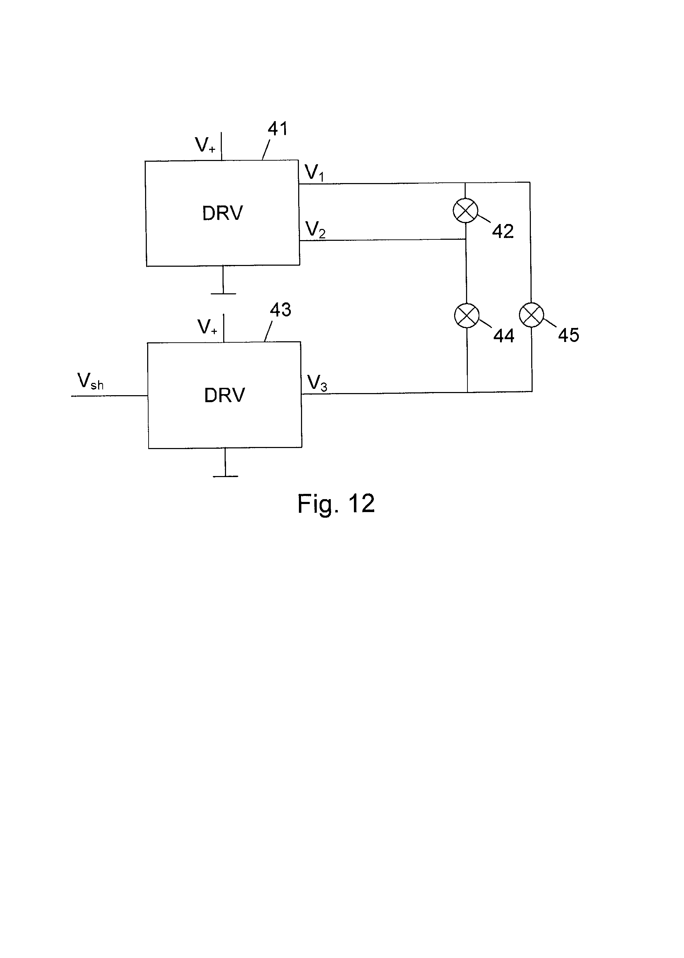

The situation for navigation mode is illustrated in figure 11. Here the signals V₁ and V₄ are out of phase, and thus the same is true for the signals S₁ and S₄. This means that in time periods T₁ and T₃ the output of the XOR gate 35 will be high, while it will be low in the time periods T₂ and T₄. The low pass filter comprising the resistor 36 and the capacitor 37 will smoothen this signal resulting in a voltage of approximately 1.2 Volts as the signal V_{S}, indicating that the illumination of the keyboard is in the navigation mode.

By means of the sense signal V_{S} the control circuitry is able to check whether the mode of the keyboard illumination corresponds to the mode of the keyboard itself during power-up. If this is not the case, a pulse in the shift signal Vₛₕ is generated causing the illumination mode to change.

It is noted that if the shift signal Vₛₕ is kept at a high level for a longer time, instead of the short 0.5 ms pulse, the signal V_{X} will be out of phase with the signal Vᵢₙ during that period. This means that also the signals A₁, B₁, C₁ and D₁ will be out of phase with the signals A, B, C and D, and eventually that V₃ and V₄ will be out of phase with V₁ and V₂. More precisely V₃ and V₄ will be shifted half a period of the 250 Hz signal Vᵢₙ, i.e. 1 ms in this case, compared to V₁ and V₂. The result is that V₂-V₃ as well as V₁-V₃ exhibit a voltage, so that both light sources 25 and 26 are illuminated at the same time along with the light source 24, which is permanently illuminated. However, the light intensity of the light sources 25 and 26 is a bit lower than that of the light source 24, because the voltages V₂-V₃ and V₁-V₃ no longer exhibit a purely triangular waveform as the voltage V₁-V₂, but it is still sufficient to accomplish illumination. Thus this mode can be used if an illumination of all light sources at the same time is desired.

An alternative embodiment of the invention is shown in figure 12. A driving circuit 41 drives a first load 42, e.g. a light source, which is connected to the output signals V₁ and V₂ of the driving circuit 41. The output signals V₁ and V₂ may be DC voltages. As an example, V₁ may be connected to the positive supply voltage V₊ and V₂ to ground. A further driving circuit 43 has an output signal V₃. Under control of a control signal Vₛₕ the output signal V₃ can be switched between a first state in which it is connected to a voltage similar to V₁ (e.g. V₊) and a second state in which it is connected to a voltage similar to V₂ (e.g. ground). Two further loads 44 and 45 are connected from V₃ to V₂ and V₁, respectively.

In the first state, i.e. V₃ similar to V₁, the loads 42 and 44 will be energized, while the load 45 is inactive. In the second state, i.e. V₃ similar to V₂, the loads 42 and 45 will be energized, while the load 44 is now inactive. Thus it is possible to switch between the two loads 44 and 45 without the need for a separate driver for each load. As for the embodiment described above, the loads may be light sources used in a keyboard having different modes. Thus the load 44 could be a light source illuminated in the navigation mode, and the load 45 correspondingly a light source illuminated in the digit mode.

Other examples of the use of light sources driven by the driver circuit described above will be mentioned in the following. These examples still relate to an illuminated keyboard or keypad of e.g. a mobile telephone.

The light source permanently switched on can be used for the display and the keypad as usual. One of the two alternating light sources can illuminate a logotype or the like situated somewhere on the phone, while the other of the alternating light sources could be illuminated whenever a telephone call, a GPRS session, a data session, a Bluetooth session or an IrDA session is established. Thus the logotype is illuminated when the phone is in a standby mode and the other light source when the phone is active.

The two alternating light sources can be used for e.g. the YES key and the NO key. During a call the NO key can be illuminated to indicate that the call can be terminated by the activation of this key. Otherwise the YES key can be illuminated to indicate that a call can be initiated.

When a phone is provided with the functionality of playing games, one of the alternating light sources can illuminate a key or a symbol indicating a bonus opportunity while the other one can illuminate a key or a symbol representing a danger of any kind. Again the permanently illuminated light source is used for the display and the keypad as usual.

It should be noted that other types of electrical loads may be used as well as light sources. As examples can be mentioned microphones, sound generators and other types of indicating devices.

Although a preferred embodiment of the present invention has been described and shown, the invention is not restricted to it, but may also be embodied in other ways within the scope of the subject-matter defined in the following claims.

## Claims

1. A method of driving at least three electrical loads (24, 25, 26; 42, 44, 45), wherein the method comprises the step of:
• providing a first driver output signal (V₁) and a second driver output signal (V₂) different from said first driver output signal; and
• connecting a first electrical load (24; 42) between said first and second driver output signals,
**characterized in that** the method further comprises the steps of:
• providing a third driver output signal (V₃) which can be switched between a first state, in which it is substantially similar to the first driver output signal (V₁), and a second state, in which it is substantially similar to the second driver output signal (V₂); and
• connecting a second electrical load (26; 45) between the first and the third driver output signal and a third electrical load (25; 44) between the second and the third driver output signal.

2. A method according to claim 1, **characterized in that** said driven electrical loads are light sources.

3. A method according to claim 1 or 2, **characterized in that** said driven light sources are of an electro-luminescent type.

4. A method according to any one of claims 1 to 3, **characterized in that** said first and second driver output signals are provided as periodic signals having a mutual phase difference.

5. A method according to claim 4, **characterized in that** said first and second driver output signals have a substantially triangular waveform.

6. A method according to any one of claims 1 to 5, **characterized in that** the method further comprises the step of providing a fourth driver output signal (V₄) which is substantially similar to the second driver output signal (V₂) when the third driver output signal (V₃) assumes its first state, and substantially similar to the first driver output signal (V₁) when the third driver output signal (V₃) assumes its second state.

7. A method according to claim 6, **characterized**
**in that** the method further comprises the step of providing a signal (V_{S}) indicating the state of said third driver output signal (V₃), said indicating signal being provided by comparing at least one of said third and fourth driver output signals to at least one of said first and second driver output signals.

8. An electronic device comprising at least three electrical loads (24, 25, 26; 42, 44, 45) and a driver circuit therefor, wherein said driver circuit is arranged to provide a first driver output signal (V₁) and a second driver output signal (V₂) different from said first driver output signal, and a first electrical load (24; 42) is connected between said first and second driver output signals,
**characterized in that**
• the driver circuit is further arranged to provide a third driver output signal (V₃) which can be switched between a first state, in which it is substantially similar to the first driver output signal (V₁), and a second state, in which it is substantially similar to the second driver output signal (V₂); and
• a second electrical load (26; 45) is connected between the first and the third driver output signal and a third electrical load (25; 44) is connected between the second and the third driver output signal.

9. An electronic device according to claim 8, **characterized in that** said electrical loads are light sources.

10. An electronic device according to claim 8 or 9, **characterized in that** said light sources are of an electro-luminescent type.

11. An electronic device according to any one of claims 8 to 10, **characterized in that** the driver circuit is arranged to provide said first and second driver output signals as periodic signals having a mutual phase difference.

12. An electronic device according to claim 11, **characterized in that** the driver circuit is arranged to provide said first and second driver output signals with a substantially triangular waveform.

13. An electronic device according to any one of claims 8 to 12, **characterized in that** the driver circuit is further arranged to provide a fourth driver output signal (V₄) which is substantially similar to the second driver output signal (V₂) when the third driver output signal assumes its first state, and substantially similar to the first driver output signal (V₁) when the third driver output signal assumes its second state.

14. An electronic device according to claim 13, **characterized in that** the device further comprises circuitry for providing a signal (V_{S}) indicating the state of said third driver output signal (V₃) by comparison of at least one of said third and fourth driver output signals to at least one of said first and second driver output signals.

15. A driver circuit for electrical loads (24, 25, 26; 42, 44, 45), said driver circuit having a first driver output terminal arranged to provide a first driver output signal (V₁) and a second driver output terminal arranged to provide a second driver output signal (V₂) different from said first driver output signal, **characterized in that**
the driver circuit further has a third driver output terminal arranged to provide a third driver output signal (V₃) which can be switched between a first state, in which it is substantially similar to the first driver output signal (V₁), and a second state, in which it is substantially similar to the second driver output signal (V₂).

16. A driver circuit according to claim 15, **characterized in that** the driver circuit is arranged to provide said first and second driver output signals as periodic signals having a mutual phase difference.

17. A driver circuit according to claim 16, **characterized in that** the driver circuit is arranged to provide said first and second driver output signals with a substantially triangular waveform.

18. A driver circuit according to any one of claims 15 to 17, **characterized in that** the driver circuit is further arranged to provide a fourth driver output signal (V₄) which is substantially similar to the second driver output signal (V₂) when the third driver output signal assumes its first state, and substantially similar to the first driver output signal (V₁) when the third driver output signal assumes its second state.
